# EUROPÄISCHE PATENTSCHRIFT

(11) **EP 3 523 161 B1**
(45) Veröffentlichungstag und Bekanntmachung des Hinweises auf die Patenterteilung: **02.12.2020**
(21) Anmeldenummer: 17784530.2
(22) Anmeldetag: 08.09.2017
(51) Int. Cl.: B60P 1/02

(54) **FAHRZEUG, INSBESONDERE EINSATZFAHRZEUG, MIT EINER LADEANORDNUNG**
VEHICLE, IN PARTICULAR EMERGENCY VEHICLE, WITH A LOADING ARRANGEMENT
VÉHICULE, NOTAMMENT VÉHICULE D'INTÉRÊT GÉNÉRAL, COMPRENANT UN SYSTÈME DE CHARGEMENT

(30) Priorität: 13.09.2016 AT 508152016
(43) Veröffentlichungstag der Anmeldung: 14.08.2019
(73) Patentinhaber: Rosenbauer International AG, 4060 Leonding (AT)
(72) Erfinder: RONACHER, Alexander, 4063 Hörsching (AT); ZAUNER, Stefan, 4113 St. Martin i.M. (AT)
(74) Vertreter: Burger, Hannes
(86) Internationale Anmeldenummer: PCT/AT2017/060221
(87) Internationale Veröffentlichungsnummer: WO 2018/049446

(56) Entgegenhaltungen:
- CH-A5- 671 374
- DE-U1- 7 800 768
- US-A- 5 067 862
- US-A1- 2003 035 695
- US-A1- 2007 231 114
- US-A1- 2009 026 785

## Beschreibung

Die Erfindung betrifft ein Fahrzeug, insbesondere ein Einsatzfahrzeug, Feuerlöschfahrzeug, Kommunalfahrzeug, Transportfahrzeug, mit mindestens einer Ladeanordnung.

Die CH 671 374 A5 beschreibt eine Ladebrücke für ein Nutzfahrzeug, insbesondere für einen Lastwagen, bei welcher der heckseitige Endabschnitt der Ladebrücke als gattungsgemäße Hebebühne ausgebildet ist. Die Hebebühne kann in paralleler Ausrichtung zur Ladebrücke mittels einer Hub- und Senkvorrichtung auf den Boden abgesenkt und wieder hochgehoben werden. Am heckseitigen Ende der Hebebühne ist ein abklappbarer Rückladen angeordnet, welcher durch seine keilförmige Form geneigt ausgebildet ist, um ein leichteres Befahren des abgesenkten Brückenteils, nämlich der Hebebühne, zu erleichtern. An der absenkbaren Hebebühne sind beidseits zwei senkrechte Holme angeordnet, welche in Führungen laufen. Die Führungen sind an den festen Seitenläden der Ladebrücke befestigt. Die Hub- und Senkbewegung kann durch zwei senkrecht angeordnete Hubzylinder erfolgen. In der obersten Position kann die absenkbare Hebebühne verriegelt werden. Eine Schwenkbewegung der Hebebühne aus der parallelen Lage zur Ladebrücke ist nicht vorgesehen.

Die US 2007/0231114 A1 beschreibt eine Ladeplattform, welche heckseitig an einem Fahrzeug angeordnet und an einem dem Fahrzeug zugewendeten Querende gelenkig gelagert ist. Weiters ist heckseitig sowie beidseits der Ladeplattform ein Führungssystem mit höhenverstellbaren Führungssäulen vorgesehen, wobei am bodenseitigen Ende jeweils eine Lagervorrichtung für die Ladeplattform angeordnet ist. An den vom Boden abgewendeten Enden der Führungssäulen sind jeweils Stellzylinder mit deren ersten Enden gehalten. Die zweiten Enden der Stellzylinder sind in etwa in der Hälfte der Tiefe der Ladeplattform daran angelenkt. Damit kann die Ladeplattform von einer teilweise hochgeklappten Verschlussstellung in eine in etwa horizontale Lage abgeklappte Beladestellung hinabgeschwenkt werden.

Aus der DE 78 00 768 U1 ist ein als Pritschenwagen ausgebildeter Anhänger bekannt geworden, bei dem die Pritsche heckseitig an einem Zwischenrahmen schwenkbar gelagert ist. In einem längsseitigen Mittelabschnitt ist zwischen der Pritsche und dem Zwischenrahmen ein Stellzylinder angeordnet, mittels welchem die Pritsche hochgeschwenkt werden kann. Zwischen einem Bodenrahmen des Pritschenwagens und dem Zwischenrahmen ist eine Scherengelenkanordnung vorgesehen, um den Zwischenrahmen in paralleler Ausrichtung bezüglich des Bodenrahmens verstellen zu können. Dazu ist ein weiterer Stellzylinder vorgesehen.

Die US 5,067,862 A beschreibt eine Transportvorrichtung für Automobile, bei der die Transportplattformen in unterschiedlichen Anordnungen an jeweils beidseits der Transportplattformen befindlichen Tragpfosten angeordnet und gehalten sind. In den ersten beschriebenen Ausbildungen sind die Transportplattformen in deren ersten Endbereich jeweils gelenkig an den Tragpfosten gelagert und ragen einseitig in Richtung auf das Heck vor. Die Transportplattformen sind über beidseitig angeordnete Gewindestangen in vertikaler Richtung an den Tragpfosten verstellbar. Weiters sind die Transportplattformen jeweils beidseitig über Stangen fixer Länge mit je einem ein Gewinde aufweisenden unteren Block mit einer der Gewindestangen verbunden. Die beidseitigen Lagerstellen der Transportplattform sind ebenfalls über jeweils einen ein Gewinde aufweisenden oberen Block mit einer der Gewindestangen verbunden. Die Neigungsverstellung erfolgt durch eine Abstandsänderung zwischen dem oberen und unteren Block durch selektives Einkuppeln oder Auskuppeln eines der Blöcke mit der Gewindestange.

Bei einem zweiten Ausführungsbeispiel der US 5,067,862 A gemäß der Fig. 8 und 9 sind die Transportplattformen ebenfalls in deren ersten Endbereich jeweils gelenkig an den Tragpfosten gelagert und ragen einseitig in Richtung auf das Heck vor. Die Neigungsverstellung der Transportplattformen erfolgt hier durch eine Längenänderung der teleskopischen Verbindungsstange zwischen dem unteren Block und der Transportplattform. Eine zusätzliche Neigungsverstellung der Transportplattform kann wiederum durch die Abstandsänderung zwischen dem oberen und unteren Block entlang der Gewindestange durch selektives Einkuppeln oder Auskuppeln erfolgen.

Das weitere Ausführungsbeispiel gemäß der Fig. 14 und 15 beschreibt eine in Richtung der Längserstreckung der Transportplattform mögliche zusätzliche Verstellung derselben relativ bezüglich der aufragenden Tragpfosten. Die Transportplattform ist hier in ihrem Mittelabschnitt gelenkig sowie in Längsrichtung derselben verschiebbar gelagert und über einen mittleren Block mit der Gewindestange gekuppelt. Weiters ist die Transportplattform jeweils beidseitig über erste Stangen fixer Länge mit je einem ein Gewinde aufweisenden unteren Block mit einer der Gewindestangen verbunden. Auf der den ersten Stangen gegenüberliegenden Seite der Tragpfosten sind weitere geneigte Stangen angeordnet, welche einerseits an der Transportplattform und andererseits an einem oberen Block angelenkt sind. Die weiteren Stangen weisen ebenfalls eine konstante Länge auf. Die Neigungsbewegungen und die Längsverschiebung der Transportplattform entlang der einander zugewendeten Tragpfosten entstammt den selektiven Eingriffen oder des Auskuppelns der auskuppelbaren als Muttern ausgebildeten mittleren und unteren Blöcken.

Die US 2003/0035695 A1 beschreibt eine innerhalb eines Transportfahrzeugs befindliche abklappbare Auffahrtsrampe, welche an ihrem frontseitigen Ende gelenkig an den beiden Seitenwänden sowie am heckseitigen Ende der oberen Traganordnung ortsfest gelagert ist. Das heckseitige Ende der Auffahrtsrampe ist über eine Hebe- und Senkanordnung in ihrer Lage verstellbar. Die Hebe- und Senkanordnung ist einerseits mit dem heckseitigen Ende der Auffahrtsrampe sowie dem Dachaufbau verbunden.

Die US 2016/0075270 A1 beschreibt eine an einem heckseitigen Ende eines Lastkraftwagens angeordnete Ladeplattform. Die Ladeplattform ist in vertikaler Richtung höhenverstellbar sowie von einer vertikalen Verschlussstellung in eine horizontale Beladestellung abschwenkbar. Weiters ragt die Ladeplattform in ihrer Beladestellung ausgehend von der Vertikalführungsanordnung über das heckseitige Ende des Lastkraftwagens nach hinten hinaus. Der Schwenkantrieb für die Ladeplattform ist im Anlenkungsbereich der Ladeplattform an der Vertikalführungsanordnung angeordnet.

Es beschreibt auch die NL 8100888 A eine an einem heckseitigen Ende eines Lastkraftwagens angeordnete Ladeplattform. Die Ladeplattform ist in vertikaler Richtung höhenverstellbar sowie von einer vertikalen Verschlussstellung in eine horizontale Beladestellung abschwenkbar. Weiters ragt die Ladeplattform in deren Verschlussstellung ausgehend von der Vertikalführungsanordnung über das heckseitige Ende des Lastkraftwagens hinaus. Der Schwenkantrieb für die Ladeplattform ist unterhalb der Ladeplattform angeordnet, wobei ein Ende des Stellzylinders an der Vertikalführungsanordnung und das andere Ende davon distanziert unterhalb der Ladefläche an der Ladeplattform angeordnet ist.

Es beschreibt auch die WO 98/54026 A1 eine gattungsgemäß ausgebildete Hebebühne für einen Lastwagen, welche anschließend an eine Ladebrücke innerhalb der Fahrzeugkarosserie angeordnet ist. Die Hebebühne kann in paralleler Ausrichtung zur Ladebrücke mittels einer Hub- und Senkvorrichtung auf den Boden abgesenkt werden, welche an jedem Eckbereich der Hebebühne je einen Stellzylinder umfasst. Am heckseitigen Ende der Hebebühne ist eine abklappbare, keilförmig abfallend ausgebildete Rampe angeordnet. Weiters sind beidseits der Hebebühne am heckseitigen Ende Führungsholme angeordnet. Es ist auch hier keine Schwenkbewegung der Hebebühne aus der parallelen Lage zur Ladebrücke vorgesehen.

Aus der WO 01/22911 A1 ist eine Hebevorrichtung bekannt geworden, welche zur Verwendung in einem Fahrzeug mit einer Seitenöffnung vorgesehen ist. Die Hebevorrichtung umfasst eine Plattform, die bei einer Speicherstellung in das Innere des Fahrzeugs gefaltet sowie hochgeschwenkt ist. Wenn sie eingesetzt wird, schwenkt die Plattform an die Außenseite des Fahrzeugs und entfaltet sich. Eine teleskopisch ausgebildete Säule ermöglicht eine Höhenverstellung, bei welcher die ausgeschwenkte Plattform zwischen einer oberen Ebene und einer unteren Ebene verstellt werden kann. Die Bewegung der Plattform kann durch Verwendung von hydraulischen Mitteln erreicht werden.

Die EP 1 560 730 B1 beschreibt ein Fahrzeug mit heb- und senkbaren Ladeboxen oder Ladeflächen. Die Ladeboxen oder Ladeflächen sind mittels einer Hubeinrichtung in vertikaler Richtung relativ bezüglich des Fahrzeugrahmens heb- und senkbar. Wenigstens eine der Ladeboxen oder Ladeflächen ist hinterhalb eine Hinterachse derart angeordnet, dass diese eine innenliegende Laderampe ausbildet. Seitlich und rückseitig sind am Fahrzeugrahmen Öffnungsflächen im Bereich der Laderampe vorgesehen, die zum Laden oder Entladen Ladeöffnungen freigeben. An der Fahrzeugrückseite ist ein Rolltor und an den beiden Seiten im Bereich der heb- und senkbaren Ladeboxen oder Ladeflächen sind jeweils Schiebetüren als Öffnungsflächen vorgesehen. Die Schiebetüren sind an ihren hinteren Enden mit senkrechten Führungsschienen für eine Führung des Rolltors versehen. Die eine Einheit bildenden Ladeboxen oder Ladeflächen sind gemeinsam in senkrechter Richtung heb- und senkbar, wobei die Hubeinrichtungen jeweils in einem Eckbereich der Ladeboxen oder Ladeflächen angeordnet sind. Um bei abgesenkten Ladeboxen oder Ladeflächen den Höhenunterschied zwischen der Ladefläche und dem Boden bzw. der Aufstandsfläche zu überwinden, ist eine klappbare Bordwand in Form einer eigenen Rampe vorgesehen. Nachteilig dabei ist, dass kein gleichmäßiger

Übergang von der Ladefläche auf den Boden ausgebildet werden kann, sondern ein Knick durch die abgeklappte Bordwand entsteht.

Aufgabe der vorliegenden Erfindung war es, die Nachteile des Standes der Technik zu überwinden und ein Fahrzeug mit zumindest einer Ladeanordnung zur Verfügung zu stellen, mittels derer ein Benutzer in der Lage ist, eine einfache, stufenfreie Entladung oder Beladung von Ladegut von einer Laderampe oder auf die Laderampe vornehmen zu können.

Diese Aufgabe wird durch ein Fahrzeug mit einer Ladeanordnung gemäß den Ansprüchen gelöst.

Das Fahrzeug umfasst:
- eine Fahrzeugkarosserie,
- mindestens ein Vorderradpaar und mindestens ein Hinterradpaar,
- mindestens eine Ladeanordnung, wobei die mindestens eine Ladeanordnung eine erste Ladeplattform und mindestens eine Hubeinheit mit einem Führungssystem und einer Stellvorrichtung umfasst, wobei mittels der Stellvorrichtung die erste Ladeplattform relativ bezüglich der Fahrzeugkarosserie heb- und senkbar ist, und die erste Ladeplattform eine Ladefläche mit einer Breite und einer Tiefe ausbildet, und wobei die erste Ladeplattform in deren oberen Ausgangsstellung sowie bei einer horizontalen Ausrichtung der Fahrzeugkarosserie ebenfalls horizontal ausgerichtet ist,
- wobei die mindestens eine Ladeanordnung innerhalb der Fahrzeugkarosserie aufgenommen und angeordnet ist,
- wobei das Führungssystem als Längsführungssystem ausgebildet ist,
- wobei das Führungssystem eine linke Führungsanordnung und eine rechte Führungsanordnung umfasst, und die beiden Führungsanordnungen in Richtung der Breite der ersten Ladeplattform jeweils beidseits der ersten Ladeplattform angeordnet sind,
- wobei die linke Führungsanordnung und die rechte Führungsanordnung des Führungssystems in einem Mittelabschnitt bezüglich der Tiefe der ersten Ladeplattform angeordnet sind,
- und wobei die linke Führungsanordnung des Führungssystems ein linkes Führungsprofil und die rechte Führungsanordnung des Führungssystems ein rechtes Führungsprofil aufweist, und dabei
- die mindestens eine Ladeanordnung eine Lagereinheit umfasst, welche Lagereinheit eine Schwenkachse definiert,
- die Lagereinheit eine linke Lagervorrichtung und eine rechte Lagervorrichtung umfasst, und die linke Lagervorrichtung eine linke Schwenkachse definiert und die rechte Lagervorrichtung eine rechte Schwenkachse definiert und die linke Schwenkachse und die rechte Schwenkachse zueinander fluchtend ausgerichtet sind sowie gemeinsam die Schwenkachse der Lagereinheit bilden,
- die erste Ladeplattform an der Lagereinheit um deren gemeinsame Schwenkachse schwenkbar gelagert ist,
- die Lagereinheit am Führungssystem angeordnet ist und dabei die linke Lagervorrichtung der Lagereinheit mit dem linken Führungsprofil und die rechte Lagervorrichtung der Lagereinheit mit dem rechten Führungsprofil verbunden ist,
- die linke und die rechte Lagervorrichtung der Lagereinheit und die daran gelagerte erste Ladeplattform in einem einer Aufstandsfläche des Fahrzeugs zuwendbaren, unteren ersten Endbereich der Führungsprofile angeordnet sind
- die mindestens eine Ladeanordnung weiters eine Schwenkeinheit umfasst,
- die erste Ladeplattform mit der Schwenkeinheit in Antriebsverbindung steht, mittels welcher Schwenkeinheit die erste Ladeplattform in ihrer relativen Position bezüglich des Führungssystems um die gemeinsame Schwenkachse der Lagereinheit verstellbar ist,
- die Schwenkeinheit zumindest ein Schwenkorgan, insbesondere eine Zylinder-Kolbenanordnung, einen Kettenantrieb, einen Riemenantrieb, einen Seilantrieb oder einen Linearantrieb, umfasst und ein erstes Ende des Schwenkorgans an der ersten Ladeplattform gehalten ist und ein zweites Ende des Schwenkorgans an dem Führungsprofil der Führungsanordnung gehalten ist,
- das erste Ende des Schwenkorgans auf einer von einer Beladeseite abgewendeten Rückseite der ersten Ladeplattform an dieser angeordnet ist, und weiters
- das zweite Ende des Schwenkorgans an einem von der Lagereinheit distanzierten zweiten Endbereich des Führungsprofils daran angeordnet ist.

Der dadurch erzielte Vorteil liegt darin, dass so eine Ladeanordnung geschaffen wird, welche einerseits relativ bezüglich der Fahrzeugkarosserie heb- und senkbar ist und zusätzlich noch die gesamte erste Ladeplattform in ihrer relativen Lage ausgehend von einer üblicherweise horizontalen Ausrichtung um die Schwenkachse der Lagereinheit mittels einer eigenen Schwenkeinheit verstellbar bzw. verschwenkbar ist. So ist es möglich, die Ladeanordnung, insbesondere die erste Ladeplattform, mittels der Stellvorrichtung soweit wie möglich in Richtung auf die Aufstandsfläche, also hin zum Boden, abzusenken und anschließend noch zur Bildung eine schiefen Ebene die erste Ladeplattform als Gesamtes soweit zu verschwenken, dass auf der Ladefläche bis hin zur Ladekante eine durchgehende Ebene zum Übergang auf den Boden geschaffen wird. Da das Führungssystem bevorzugt als Längsführungssystem ausgebildet ist, wird eine geradlinige Heb- und/oder Senkbewegung der ersten Ladeplattform relativ bezüglich der Fahrzeugkarosserie durchgeführt. Durch das gewählte geradlinig ausgerichtete Längsführungssystem wird so auch eine ausreichende sichere Verstellbewegung auf geringstem Raum durchgeführt.

Umfasst das Führungssystem eine linke Führungsanordnung und eine rechte Führungsanordnung und sind die beiden Führungsanordnungen in Richtung der Breite der ersten Ladeplattform jeweils beidseits der ersten Ladeplattform angeordnet, wird durch das beidseitige Anordnen der Führungsanordnungen zur Bildung des Führungssystems so eine symmetrische Krafteinleitung, ausgehend von der ersten Ladeplattform hin auf das Führungssystem mit den Führungsanordnungen geschaffen.

Ist das Führungssystem, insbesondere die linke und die rechte Führungsanordnung, in einem Mittelabschnitt bezüglich der Tiefe der ersten Ladeplattform angeordnet, wird durch die Anordnung der Führungsanordnungen und damit auch der Lagervorrichtungen, an welchen die Ladeplattform schwenkbar gelagert ist, so die Krafteinwirkung und damit in weiterer Folge aber auch die Verstell- bzw. Rückhaltekraft der Schwenkeinheit geringer gehalten. Durch die Verbindung der Schwenkeinheit, insbesondere dessen Schwenkorgan, einerseits mit der Ladeplattform und andererseits mit dem Führungsprofil der Führungsanordnung wird so mit geringen Stellkräften eine platzsparende Anordnung der Schwenkeinheit geschaffen.

Weist die linke Führungsanordnung des Führungssystems ein linkes Führungsprofil und die rechte Führungsanordnung des Führungssystems ein rechtes Führungsprofil auf, und ist die linke Lagervorrichtung der Lagereinheit mit dem linken Führungsprofil und die rechte Lagervorrichtung der Lagereinheit mit dem rechten Führungsprofil verbunden, wird durch das Vorsehen von jeweils zumindest einem eigenen Führungsprofil an jedem der Seitenbereiche der Plattform so in Verbindung mit den Lagervorrichtungen sowie der Ladeplattform eine kompakte Baueinheit geschaffen, welche einfach und stabil ausgebildet ist und eine gemeinsame Verstellbewegung relativ bezüglich der Fahrzeugkarosserie ermöglicht.

Umfasst die Lagereinheit eine linke Lagervorrichtung und eine rechte Lagervorrichtung, und definiert die linke Lagervorrichtung eine linke Schwenkachse und die rechte Lagervorrichtung eine rechte Schwenkachse, wird durch das Vorsehen der beiden Lagervorrichtungen so die erste Ladeplattform in einer zweischnittig ausgebildeten Lagereinheit verkantungsfrei gelagert. Damit wird aber auch eine größere Breite für die Ausbildung der ersten Ladeplattform vorgesehen, wodurch trotz der Schwenkmöglichkeit eine ausreichend stabile Lagerung geschaffen wird. Sind die linke Schwenkachse und die rechte Schwenkachse zueinander fluchtend ausgerichtet und bilden diese gemeinsam die Schwenkachse der Lagereinheit, wird damit eine zentrale gemeinsame Schwenkachse geschaffenn, um so eine verkantungsfreie Schwenkbewegung der ersten Ladeplattform durchzuführen.

Sind die Lagereinheit, insbesondere deren linke und rechte Lagervorrichtung, und die daran gelagerte erste Ladeplattform in einem einer Aufstandsfläche des Fahrzeugs zuwendbaren, unteren ersten Endbereich der Führungsprofile angeordnet, wird dadurch einerseits eine ausreichende Führungsgenauigkeit der Führungsprofile sowie andererseits eine bodennahe Absenkung der ersten Ladeplattform erzielt.

Umfasst weiters die Schwenkeinheit zumindest ein Schwenkorgan, insbesondere eine Zylinder-Kolbenanordnung, einen Kettenantrieb, einen Riemenantrieb, einen Seilantrieb oder einen Linearantrieb, und ist ein erstes Ende des Schwenkorgans an der ersten Ladeplattform gehalten und ist ein zweites Ende des Schwenkorgans an dem Führungsprofil der Führungsanordnung gehalten, wird dadurch eine einfache Schwenkbewegung und eine damit verbundene Neigungsverstellung unabhängig von der Hebe- und Senkbewegung zumindest einer der Ladeplattformen ermöglicht. So wird eine kompakte Baueinheit geschaffen, welche unabhängig voneinander die gewünschten Verstellbewegungen durchführt. Durch die Verbindung mit dem Führungsprofil ist auch das Schwenkorgan in einem seitlichen äußeren Randbereich der Ladeplattform angeordnet.

Ist das erste Ende des Schwenkorgans auf einer von einer Beladeseite abgewendeten Rückseite der ersten Ladeplattform an dieser gehalten, wird durch die hintere bzw. rückwärtige Anordnung des Schwenkorgans an der ersten Ladeplattform so eine hindernisfreie, große Breite der Ladefläche der Ladeplattform von der Beladeseite bis hin zur hinteren Endkante der Ladeplattform geschaffen.

Ist das zweite Ende des Schwenkorgans an einem von der Lagereinheit distanzierten zweiten Endbereich des Führungsprofils angeordnet, wird dadurch eine Schrägstellung des oder der Schwenkorgane relativ bezüglich des Führungsprofils erzielt, wodurch mit geringeren Verstellkräften sowie Rückhaltekräften das Auslagen zur Stabilisierung der Ladeplattform relativ bezüglich der Führungsanordnungen, insbesondere der Führungsprofile, gefunden wird.

Eine andere Ausführungsform zeichnet sich dadurch aus, dass die Ladefläche der ersten Ladeplattform in ihrer Ausgangsstellung bei einer horizontalen Ausrichtung der Fahrzeugkarosserie ebenfalls eine horizontale Ausrichtung aufweist und nach deren Verschwenkung auf die von der Fahrzeugkarosserie abgewendete Seite abfallend ausgerichtet ist. Dadurch kann in Verbindung mit der Heb- und/oder Senkbewegung zusätzlich noch eine gesamte Verschwenkbewegung zumindest der ersten Ladeplattform mit ihrer Ladefläche durchgeführt werden, um so eine durchgängig schiefe Ebene auszubilden. Durch die Schrägstellung der Ladeplattform und die bodennahe Anordnung der gesamten Hubeinheit mit der ersten Ladeplattform kann damit ein flacher Übergang von der Ladefläche hin auf die Aufstandsfläche bzw. den Boden geschaffen werden. Weiters kann damit aber auch eine Anpassung an unterschiedliche Geländeformen einfach durchgeführt werden.

Eine andere alternative Ausführungsform zeichnet sich dadurch aus, dass die Ladeanordnung zumindest eine Positioniervorrichtung und/oder eine Feststellvorrichtung umfasst und zumindest die erste Ladeplattform in ihrer Ausgangsstellung mittels der Positioniervorrichtung und/oder der Feststellvorrichtung in ihrer Ausgangsstellung relativ bezüglich der Fahrzeugkarosserie positioniert ist und/oder gehalten ist. Damit kann in der Ausgangsstellung und somit auch während der Fahrbewegung des Fahrzeugs bei in Eingriff befindlicher Feststellvorrichtung eine Arretierung zumindest der ersten Ladeplattform relativ bezüglich der Fahrzeugkarosserie erzielt werden. Ist auch noch zumindest eine Positioniervorrichtung vorgesehen, kann die erste Ladeplattform nach Beendigung der Hebebewegung in einer vordefinierten Lage ortsfest positioniert, insbesondere zentriert, werden. So kann in der vordefinierten Lage die Arretierung mittels der Feststellvorrichtung einfach und sicher durchgeführt werden. Darüber hinaus kann so auch noch die Schwenkeinheit und/oder die Stellvorrichtung, insbesondere deren Stellorgan, während der Ausgangsstellung oder der Transportstellung entlastet und mögliche Schwingungen gedämpft oder überhaupt vermieden werden.

Eine andere alternative Ausführungsform zeichnet sich dadurch aus, wenn das Führungssystem zumindest eine weitere Führungsanordnung umfasst und die zumindest eine weitere Führungsanordnung schwenkbar mit der ersten Ladeplattform verbunden ist. So kann auch in jener von der vorderen Ladekante abgewendeten Seite der ersten Führungsanordnungen an der ersten Ladeplattform eine zusätzliche Verstellbewegung mittels der zumindest einen weiteren Führungsanordnung durchgeführt werden. In diesem Fall könnte die Schwenkeinheit durch die zumindest eine weitere Führungsanordnung selbst gebildet sein. Wenn die Abwärtsverstellung der ersten Ladeplattform im Bereich ihrer Rückseite bzw. hinteren Seite bei der weiteren Führungsanordnung gestoppt wird und die Abwärtsverstellung bei den linken und rechten Führungsanordnungen weiter durchgeführt wird, kann bei einem ausreichenden Längenausgleich zwischen der ersten Ladeplattform und der weiteren Führungsanordnung die Schrägstellung und damit verbunden das Abwärtsschwenken der ersten Ladeplattform erzielt werden.

Weiters kann es vorteilhaft sein, wenn das Führungssystem, insbesondere dessen Führungsanordnungen mit deren Führungsprofilen, bei einer horizontalen Ausrichtung der Fahrzeugkarosserie in vertikaler Richtung verlaufend ausgerichtet ist. Durch die vertikale Ausrichtung des Führungssystems kann so eine platzsparende Anordnung der gesamten Ladeanordnung innerhalb der Fahrzeugkarosserie auf geringstem Raum geschaffen werden.

Eine weitere mögliche und gegebenenfalls alternative Ausführungsform hat die Merkmale, dass die linke Führungsanordnung zumindest eine linke Längsführungsvorrichtung umfasst und die rechte Führungsanordnung zumindest eine rechte Längsführungsvorrichtung umfasst, und das linke Führungsprofil an der zumindest einen linken Längsführungsvorrichtung und das rechte Führungsprofil an der zumindest einen rechten Längsführungsvorrichtung geführt ist. Durch das Vorsehen der eigenen Längsführungsvorrichtungen kann jedes der Führungsprofile für sich ausreichend genau in Richtung der Verstellbewegung geführt werden. Darüber hinaus kann so auch eine verkantungsfreie Längsführung geschaffen werden.

Weiters kann es vorteilhaft sein, wenn die Ladeanordnung zumindest eine weitere Ladeplattform umfasst, welche zumindest eine weitere Ladeplattform in vertikaler Richtung distanziert von der ersten Ladeplattform an einem der Führungsprofile angeordnet ist. Damit kann der zur Verfügung stehende Aufnahmeraum innerhalb der Fahrzeugkarosserie noch besser genutzt werden und weitere Ausrüstungsgegenstände ordnungsgemäß und sicher verstaut werden.

Eine weitere Ausbildung sieht vor, dass die zumindest eine weitere Ladeplattform mittels einer weiteren Lagervorrichtung der Lagereinheit an einem der Führungsprofile schwenkbar gelagert ist. Damit kann auch an der oder den weiteren Ladeplattformen der Einblick auf den oder die weiteren Ladeplattformen und auch die Entnahme von Gegenständen von der jeweiligen Ladeplattform erleichtert werden.

Eine andere alternative Ausführungsform zeichnet sich dadurch aus, dass die zumindest eine weitere Ladeplattform mit der ersten Ladeplattform mittels eines Kopplungselements gekoppelt ist. So kann einfach eine Bewegungsverbindung für die gemeinsame Schwenkbewegung geschaffen werden. Darüber hinaus kann so aber auf zusätzliche Schwenkorgane zur Durchführung der Schwenkbewegung verzichtet werden.

Eine weitere alternative Ausführungsform zeichnet sich dadurch aus, dass die erste Ladeplattform in Richtung ihrer Breite geteilt ausgebildet ist, und ein linker Ladeplattformteil der ersten Ladeplattform mittels der linken Lagervorrichtung der Lagereinheit an der linken Führungsanordnung des Führungssystems und ein rechter Ladeplattformteil der ersten Ladeplattform mittels der rechten Lagervorrichtung der Lagereinheit an der rechten Führungsanordnung des Führungssystems schwenkbar gelagert ist und jede der Führungsanordnungen mit einem eigenen, unabhängigen Stellorgan der Stellvorrichtung antriebsverbunden ist. Durch die Unterteilung und damit verbundene Aufteilung der ersten Ladeplattform in zwei voneinander unabhängige Ladeplattformteile kann der Laderaum noch besser strukturiert aufgeteilt werden und die Entnahme besser und übersichtlicher in Bezug auf die Entnahmehöhe gestaltet werden.

Eine weitere alternative Ausführungsform zeichnet sich dadurch aus, wenn jeder der Ladeplattformteile mit einem eigenen, unabhängigen Schwenkorgan der Schwenkeinheit antriebsverbunden ist. So kann eine noch individuellere Entnahmemöglichkeit geschaffen werden.

Eine andere Ausführungsform zeichnet sich dadurch aus, dass die linke Schwenkachse und die rechte Schwenkachse zueinander fluchtend ausgerichtet sind sowie gemeinsam die Schwenkachse der Lagereinheit bilden. Damit kann eine zentrale gemeinsame Schwenkachse geschaffen werden, um so eine verkantungsfreie Schwenkbewegung der ersten Ladeplattform durchführen zu können.

Eine weitere Ausbildung sieht noch vor, dass die zumindest eine linke Längsführungsvorrichtung und die zumindest eine rechte Längsführungsvorrichtung feststehend an der Fahrzeugkarosserie gehalten sind. Dadurch kann auf geringstem Raum und damit mit geringem Platzbedarf innerhalb der Fahrzeugkarosserie eine großflächige Ladeplattform zur Aufnahme der unterschiedlichsten aufzunehmenden Gegenstände geschaffen werden.

Eine andere Ausführungsform zeichnet sich dadurch aus, dass jede der Längsführungsvorrichtungen jeweils mehrere Führungsrollen umfasst, wobei in Längsrichtung der Führungsanordnung gesehen, ein Führungsrollenpaar einer der Längsführungsvorrichtungen in Richtung der Tiefe der ersten Ladeplattform voneinander distanziert angeordnete Führungsrollen umfasst und Drehachsen der Führungsrollen des Führungsrollenpaars jeweils in Richtung der Tiefe der ersten Ladeplattform sowie in senkrechter Richtung bezüglich der Längserstreckung des Führungsprofils ausgerichtet sind und zwischen dem Führungsrollenpaar zumindest eine weitere der Führungsrollen angeordnet ist, deren Drehachse in Richtung der Breite der ersten Ladeplattform sowie in senkrechter Richtung bezüglich der Längserstreckung des Führungsprofils ausgerichtet ist. Durch die zueinander um 90° versetzte Anordnung der Drehachsen zwischen jenen Führungsrollen des Führungsrollenpaares und jener Führungsrolle, welche zwischen dem Führungsrollenpaar angeordnet ist, kann so in Vertikalrichtung gesehen sowohl in Richtung der Breite als auch in Richtung der Tiefe eine hohe Führungsgenauigkeit geschaffen werden. Da bevorzugt jede der Führungsrollen an jeweils diametral gegenüberliegenden Führungsflächen des Führungsprofils anliegt, kann so eine sehr hohe Führungsgenauigkeit und Abstützwirkung sowohl in Richtung der Tiefe als auch in Richtung der Breite der ersten Ladeplattform erzielt werden.

Eine weitere Ausbildung sieht vor, dass die Schwenkeinheit zwei Schwenkorgane umfasst und die beiden Schwenkorgane in Richtung der Breite der ersten Ladeplattform voneinander distanziert angeordnet sind. Dadurch kann eine gleichmäßige Krafteinleitung für die Durchführung der Schwenkbewegung auf die Ladeplattform erzielt werden. Darüber hinaus kann so aber auch ein großer Freiraum an der Ladeplattform geschaffen werden, welcher zur Aufnahme der unterschiedlichsten Ladegüter zur Verfügung gestellt wird.

Schließlich zeichnet sich eine mögliche Ausführungsform dadurch aus, dass die Stellvorrichtung der mindestens einen Hubeinheit zumindest ein Stellorgan und zumindest eine Zahnstange umfasst, und die zumindest Zahnstange an dem Führungsprofil der Führungsanordnung angeordnet ist und das zumindest eine Stellorgan an der Fahrzeugkarosserie angeordnet ist. Dadurch kann eine feinfühlige Verstellbewegung der gesamten Einheit aus Ladeplattform, Führungsprofilen und Lagervorrichtungen relativ bezüglich der Fahrzeugkarosserie durchgeführt werden.

Zum besseren Verständnis der Erfindung wird diese anhand der nachfolgenden Figuren näher erläutert.

Es zeigen jeweils in stark vereinfachter, schematischer Darstellung:
- Fig. 1: ein Fahrzeug mit einer heb- und senkbaren Ladeanordnung, in Seitenansicht;
- Fig. 2: das Fahrzeug nach Fig. 1 in einer Ansicht auf das geöffnete Heck;
- Fig. 3: ein Detail der Ladeanordnung, in einer Ansicht auf die in Fahrtrichtung links angeordneten Komponenten der Hubeinheit, Lagereinheit sowie Schwenkeinheit;
- Fig. 4: die linke Führungsanordnung in Draufsicht geschnitten, gemäß den Linien IV-IV in Fig. 3;
- Fig. 5: eine weitere mögliche Ausbildung der Ladeanordnung bei einem Fahrzeug, in einer Ansicht auf das geöffnete Heck;
- Fig. 6: ein Detail einer weiteren möglichen Ladeanordnung, in einer Ansicht auf die in Fahrtrichtung links angeordneten Komponenten der Hubeinheit, Lagereinheit sowie Schwenkeinheit, mit einer zusätzlichen Ladeplattform.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

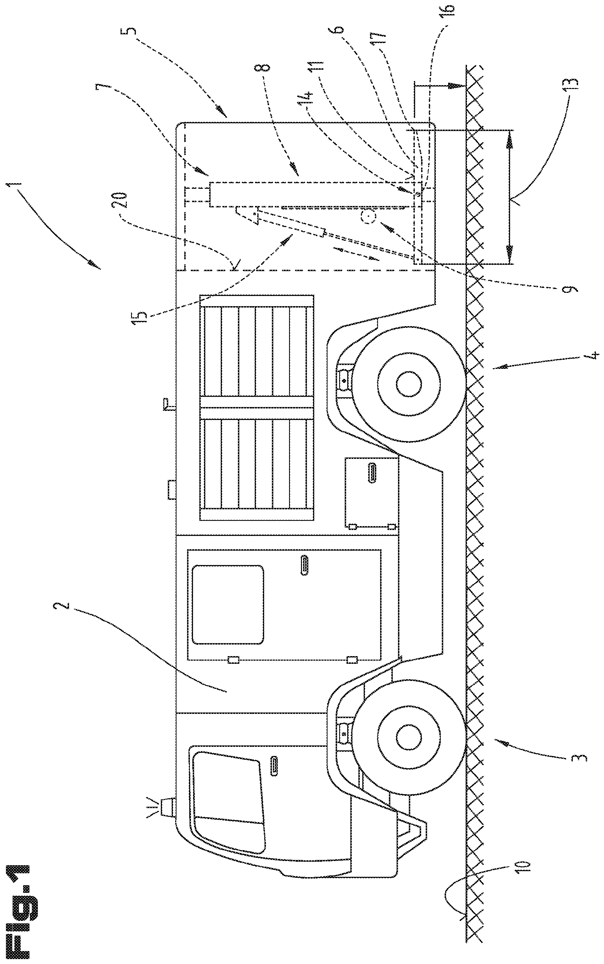

In den Fig. 1 bis 4 ist ein Fahrzeug 1 in vereinfachten Ansichten sowie Detailansichten gezeigt. Das Fahrzeug 1 kann zu unterschiedlichsten Einsatzzwecken dienen, insbesondere als Einsatzfahrzeug, Feuerlöschfahrzeug, Kommunalfahrzeug oder Transportfahrzeug.

An einer Fahrzeugkarosserie 2 sind mindesten ein Vorderradpaar 3 und mindestens ein Hinterradpaar 4 gehalten oder gelagert. Es wäre auch möglich, anstatt von Einzelrädern auch Zwillingsräder einzusetzen. Auf die Darstellung einer Antriebseinheit oder sonstigen Einheiten bzw. Bauteilkomponenten wurde der besseren Übersichtlichkeit halber verzichtet.

Die Fahrzeugkarosserie 2 des Fahrzeugs 1 kann als selbsttragende Karosserie oder auch als nicht selbsttragende Karosserie ausgebildet sein. Es wird hier jegliche Struktur verstanden welche unter anderem dazu ausgebildet ist, die einzelnen Radpaare, die Antriebselemente und viele andere Komponenten zu tragen.

In dem hier gezeigten Ausführungsbeispiel ist eine mögliche Form eines Einsatzfahrzeugs als Feuerwehrfahrzeug dargestellt. In der Fahrzeugkarosserie 2 können die unterschiedlichsten Aufnahmefächer und/oder Aufnahmeboxen vorgesehen sein, um so die für den Einsatz notwendigen Ausrüstungsgegenstände, Werkzeuge und vieles mehr geordnet mitführen zu können.

Im Heckbereich des Fahrzeugs 1 ist noch angedeutet, dass innerhalb der Fahrzeugkarosserie 2 zumindest eine eigene Einheit als sogenannte Ladeanordnung 5 angeordnet, insbesondere innerhalb dieser aufgenommen ist. Die gesamte Ladeanordnung 5 ist beim vorliegenden Ausführungsbeispiel in Fahrtrichtung gesehen hinterhalb des Hinterradpaars 4 vorgesehen. Dabei sei erwähnt, dass die Ladeanordnung 5 oder mehrere der Ladeanordnungen 5 auch an zumindest einer der Fahrzeuglängsseiten des Fahrzeugs angeordnet bzw. vorgesehen sein kann oder können. Es wäre auch noch möglich, mehrere der Ladeanordnungen an beliebigen Positionen des Fahrzeugs 1 vorzusehen oder anzuordnen. Um eine ausreichende Verstellbewegung zur Durchführung der Hebe- oder Senkbewegung durchführen zu können, soll die Ladeanordnung 5 so angeordnet sein, dass ein ungehinderter Freiraum von der Fahrzeugkarosserie 2 hin in Richtung auf den Boden bzw. eine Aufstandsfläche 10 zur Verfügung steht, um eine ungehinderte Absenkbewegung durchführen zu können.

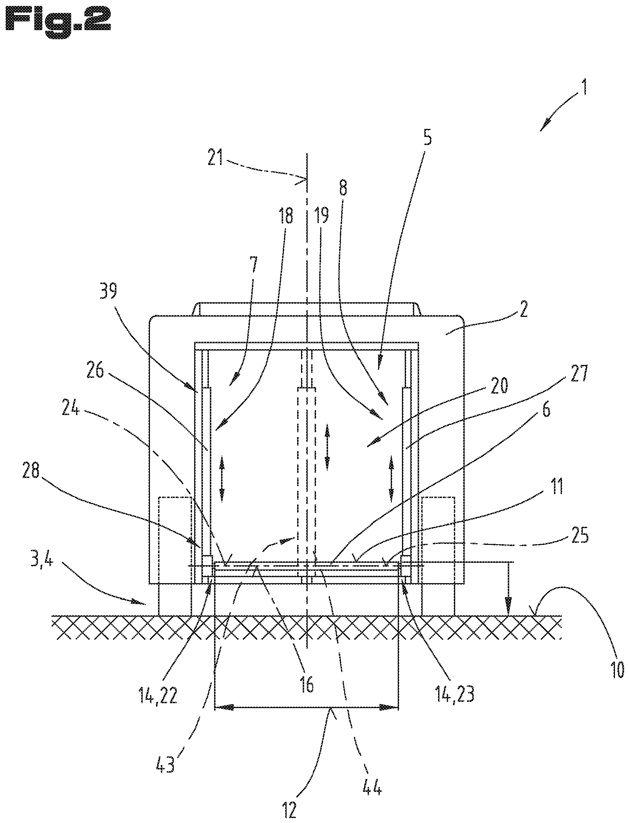

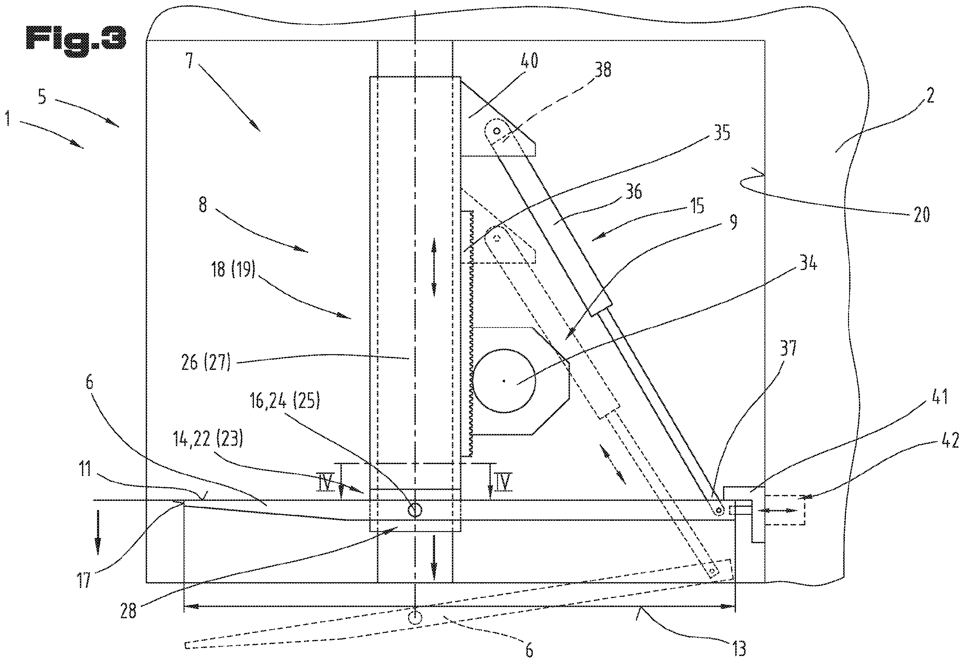

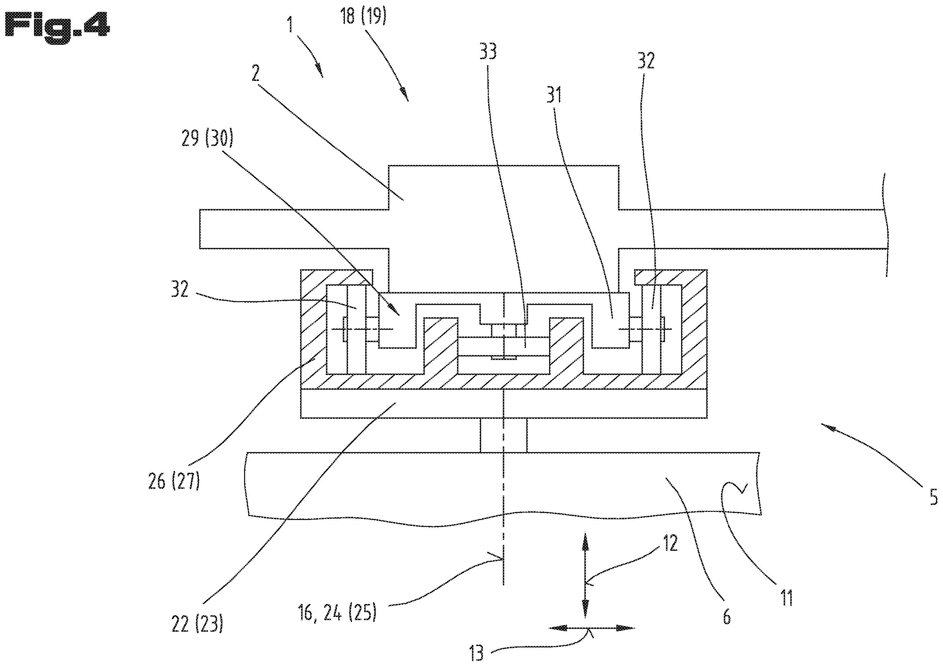

Die Ladeanordnung 5 selbst kann wiederum aus einer Vielzahl von Bauteilkomponenten sowie Bauteilgruppen gebildet sein, welche in den Fig. 1 und 2 nur angedeutet und in den weiteren Fig. 3 und 4 näher beschrieben und erläutert werden.

Die Ladeanordnung 5 umfasst eine erste Ladeplattform 6 und mindestens eine Hubeinheit 7 auf. Die Hubeinheit 7 umfasst ihrerseits ein Führungssystem 8 sowie eine Stellvorrichtung 9. Mittels der Stellvorrichtung 9 kann die erste Ladeplattform 6 relativ bezüglich der Fahrzeugkarosserie 2 in ihrer Position verstellt werden. Damit ist die erste Ladeplattform 6 heb- und senkbar relativ bezüglich der Fahrzeugkarosserie 2. In der hier dargestellten angehobenen Position befindet sich die erste Ladeplattform 6 innerhalb der Fahrzeugkarosserie 2 und kann mittels der Stellvorrichtung 9 in eine bodennahe Stellung abgesenkt werden.

Eine Aufstandsfläche 10 ist unterhalb des Fahrzeugs 1 als ebene, horizontale Fläche angedeutet. Durch die Höhenverstellbarkeit der ersten Ladeplattform 6 wird es für die Beladung oder Entladung der unterschiedlichsten Gegenstände möglich, die erste Ladeplattform 6 soweit abzusenken, dass eine von der ersten Ladeplattform 6 definierte Ladefläche 11 bis nahe bzw. unmittelbar in das Niveau der Aufstandsfläche 10 abgesenkt werden kann. Die erste Ladeplattform 6 bzw. deren Ladefläche 11 ist mit einer Breite 12 sowie einer Tiefe 13 ausgebildet, welche gänzlich bzw. zu einem überwiegenden Flächenanteil zur Beladung bereitsteht.

Die erste Ladeplattform 6 mit ihrer Ladefläche 11 kann entweder nur als reine ebene Plattform ausgebildet sein oder aber auch zumindest bereichsweise mit einer von der Ladefläche 11 aufragenden Umgrenzung in Form einer Ladebox oder dergleichen ausgebildet sein.

Die mindestens eine Ladeanordnung 5 umfasst hier weiters noch eine Lagereinheit 14 sowie eine Schwenkeinheit 15. Die Lagereinheit 14 ist ihrerseits am Führungssystem 8 angeordnet bzw. daran gehalten oder als solche ausgebildet. Dabei definiert die Lagereinheit 14 ihrerseits eine Schwenkachse 16. Die erste Ladeplattform 6 ist ihrerseits an der Lagereinheit 14 um deren Schwenkachse 16 schwenkbar gelagert.

Durch das Vorsehen der Lagereinheit 14 kann die erste Ladeplattform 6 schwenkbar um deren Schwenkachse 16 relativ bezüglich des Führungssystems 8 gelagert sein. Zur Durchführung der relativen Schwenkbewegung der ersten Ladeplattform 6 dient die Schwenkeinheit 15. Dazu steht die erste Ladeplattform 6 mit der Schwenkeinheit 15 in Antriebsverbindung. Mittels der Schwenkeinheit 15 kann die erste Ladeplattform 6 in ihrer relativen Position bezüglich des Führungssystems 8 um die Schwenkachse 16 der Lagereinheit 14 verschwenkt werden.

Befindet sich die erste Ladeplattform 6 innerhalb der Fahrzeugkarosserie 2 und somit in deren oberen Ausgangsstellung, ist die Ladefläche 11 der ersten Ladeplattform 6 bei einer horizontalen Ausrichtung der Fahrzeugkarosserie 2 ebenfalls horizontal ausgerichtet. Erfolgt die relative Verstellung der ersten Ladeplattform 6 gemäß dem eingetragenen Pfeil in Richtung auf die Aufstandsfläche 10, kann die Verschwenkung der ersten Ladeplattform 6 mittels der zumindest einen Schwenkeinheit 15 durchgeführt werden.

Bevorzugt erfolgt das Verschwenken der ersten Ladeplattform 6 derart, dass diese bzw. deren Ladefläche 11 nach der durchgeführten Verschwenkung auf die von der Fahrzeugkarosserie 2 abgewendete Seite nach außen abfallend ausgerichtet ist. Damit wird es möglich, dass eine in Fahrtrichtung gesehen hintere Ladekante 17 der ersten Ladeplattform 6, also die heckseitige Ladekante bzw. die Längskante der Ladeplattform 6, soweit in Richtung auf die Aufstandsfläche 10 abgesenkt und verschwenkt werden kann, dass ein nahezu stufenloser Übergang von der Ladefläche 11 hin auf die Aufstandsfläche 10 erreicht werden kann. Durch diese Schwenkbewegung der ersten Ladeplattform 6 kann so auch die Möglichkeit geschaffen werden, beispielsweise mitgeführte größenmäßig kleiner Transportfahrzeuge oder dergleichen während der Anfahrt zum Einsatzort innerhalb der Fahrzeugkarosserie 2 mitzuführen und für den Einsatzzweck die Ladeplattform 6 zuerst abzusenken und anschließend mittels der Schwenkeinheit 15 eine vordefinierte Winkelstellung der ersten Ladeplattform 6 einzustellen, sodass ein einfacher Entladevorgang durchgeführt werden kann.

Sind mehrere Ladeanordnungen 5 innerhalb der Fahrzeugkarosserie 2 des Fahrzeugs 1 vorgesehen, ist nach der Absenkung und dem Abschwenkvorgang zumindest die erste Ladeplattform 6 auf die von der Fahrzeugkarosserie 2 abgewendete Seite abfallend ausgerichtet. In der Fig. 3 ist die abgesenkte und auch verschwenkte Entladestellung der Ladeplattform 6 in strichlierten Linien angedeutet.

Weiters ist hier noch zu ersehen, dass das Führungssystem 8 als Längsführungssystem ausgebildet ist. Damit kann eine geradlinige Verstellbewegung der ersten Ladeplattform 6 relativ bezüglich der Fahrzeugkarosserie erzielt werden.

Das hier eingesetzte Führungssystem 8, welches als Linear- bzw. Geradführung ausgebildet ist, weist bei Ansicht auf die Heckseite des Fahrzeugs 1 bzw. der Fahrzeugkarosserie 2 eine linke Führungsanordnung 18 sowie eine rechte Führungsanordnung 19 auf. Die beiden Führungsanordnungen 18, 19 sind bezüglich der ersten Ladeplattform 6 in Richtung von deren Breite 12 jeweils beidseits der ersten Ladeplattform 6 angeordnet.

Zur Aufnahme der gesamten Ladeanordnung 5 ist in der Fahrzeugkarosserie 2 ein Aufnahmeraum 20 vorgesehen bzw. ausgebildet, welcher auch als schachtartig bezeichnet werden kann. Der Aufnahmeraums 20 kann außenseitig, also im Bereich der äußeren Umgrenzung der Fahrzeugkarosserie 2, mit einem oder mehreren nicht näher bezeichneten Verschlusselementen verschlossen sein, welches oder welche von einer den Aufnahmeraum 20 abschließenden bzw. verschließenden Stellung in eine Öffnungsstellung verstellbar sind, um so den Zugang in den Aufnahmeraum 20 hinein zu ermöglichen. Das oder die Verschlusselemente können beispielsweise durch eine oder mehrere Türen, einen Rollladen, eine Planenverkleidung oder dergleichen gebildet sein. Bei der hier dargestellten Ansicht auf das Heck ist der Aufnahmeraum 20 mit geöffnetem Verschlusselement gezeigt.

Aufgrund der hier beidseitig vorgesehenen Anordnung der linken Führungsanordnung 18 und der rechten Führungsanordnung 19 zur Bildung des Führungssystems 8 wird nachfolgend die Detailausbildung nur für die in Fahrtrichtung gesehen linksseitig der ersten Ladeplattform 6 angeordneten Komponenten bzw. Bauteilgruppen erfolgen, wobei in analoger Weise die gleiche Anordnung spiegelbildlich bezüglich einer Fahrzeugmittellängsebene 21 ausgebildet sind. Dazu sind in den Fig. 2 bis 4 die Bezugszeichen der jeweils rechtsseitig angeordneten Bauteilkomponenten neben den Bezugszeichen der linksseitig angeordneten Bauteilkomponenten in Klammern gesetzt worden.

Die zuvor beschriebene Lagereinheit 14 umfasst ihrerseits eine linke Lagervorrichtung 22 und eine rechte Lagervorrichtung 23. Die linke Lagervorrichtung 22 definiert ihrerseits eine linke Schwenkachse 24, wobei die rechte Lagervorrichtung 23 eine rechte Schwenkachse 25 definiert. Durch die beidseitige Anordnung der einzelnen Lagervorrichtungen 22, 23 ist darauf zu achten, dass die linke Schwenkachse 24 und die rechte Schwenkachse 25 zueinander fluchtend ausgerichtet sind. Durch die räumliche Trennung der beiden Lagervorrichtungen 22, 23 mit deren Schwenkachsen 24, 25 definieren bzw. bilden die beiden Schwenkachsen 24, 25 gemeinsam die Schwenkachse 16 der Lagereinheit 14.

Die hier dargestellte linke Führungsanordnung 18 des Führungssystems 8 weist zumindest ein linkes Führungsprofil 26 auf. Die rechte Führungsanordnung 19 des Führungssystems 8 umfasst analog dazu zumindest ein rechtes Führungsprofil 27. Weiters ist hier noch zu ersehen, dass die linke Lagervorrichtung 22 der Lagereinheit 14 und das linke Führungsprofil 26 miteinander verbunden sind. Analog dazu ist aber auch das rechte Führungsprofil 27 mit der rechten Lagervorrichtung 23 der Lagereinheit 14 verbunden bzw. ist die rechte Lagervorrichtung 23 am rechten Führungsprofil 27 angeordnet, insbesondere daran befestigt.

Um eine bevorzugt vertikal bezüglich der Aufstandsfläche 10 ausgerichtete Verstellbewegung der ersten Ladeplattform 6 im Aufnahmeraum 20 zu ermöglichen, ist das Führungssystem 8, insbesondere dessen Führungsprofile 26, 27, bei einer horizontalen Ausrichtung der Fahrzeugkarosserie 2 in Vertikalrichtung verlaufend ausgerichtet. Dadurch kann auf geringstem Raum eine Höhenverstellung der ersten Ladeplattform 6 mittels der beiden Führungsprofile 26, 27 sowie den an diesen angeordneten oder vorgesehenen Lagervorrichtungen 22, 23 gemeinsam erfolgen.

Um die erste Ladeplattform 6 sehr bodennah, also in unmittelbar benachbarter Anordnung zur Aufstandsfläche 10, absenken zu können, ist es vorteilhaft, wenn die Lagereinheit 14, insbesondere deren linke und rechte Lagervorrichtung 22, 23, in einem der Aufstandsfläche 10 des Fahrzeugs 1 zuwendbaren, unteren ersten Endbereich 28 der Führungsprofile 26, 27 angeordnet ist. Durch diese bodennahe Anordnung der beiden Lagervorrichtungen 22, 23 und damit auch verbunden der daran gelagerten bzw. gehaltenen ersten Ladeplattform 6, können so die beiden Führungsprofile 26, 27 der beiden Führungsanordnungen 18, 19 gemeinsam geführt abgesenkt werden.

Zur Führung der beiden Führungsprofile, nämlich des linken Führungsprofils 26 und des rechten Führungsprofils 27, sind noch eigene Längsführungsvorrichtungen vorzusehen. So umfasst die linke Führungsanordnung 18 zur Führung des linken Führungsprofils 26 zumindest eine linke Längsführungsvorrichtung 29. Analog dazu weist auch die rechte Führungsanordnung 19 zumindest eine rechte Längsführungsvorrichtung 30 auf. Damit wird es möglich, jedes der beiden Führungsprofile 26, 27 unabhängig voneinander jeweils an einer eigenen Längsführungsvorrichtung, nämlich der linken Längsführungsvorrichtung 29 oder der rechten Längsführungsvorrichtung 30 zu führen. Zur Erzielung einer ausreichenden Kippsicherheit können auch mehrere der einzelnen Längsführungsvorrichtungen 29 und 30 in vertikaler Richtung übereinander bei jeder der Führungsanordnungen 18, 19 angeordnet bzw. vorgesehen werden.

Im vorliegenden Ausführungsbeispiel bildet die erste Ladeplattform 6 gemeinsam mit der linken Lagervorrichtung 22, der rechten Lagervorrichtung 23 sowie dem linken Führungsprofil 26 und dem rechten Führungsprofil 27 eine zusammengehörige Baueinheit, welche gemeinsam an der oder den linken Längsführungsvorrichtungen 29 sowie der oder den rechten Längsführungsvorrichtungen 30 geführt ist. Die zuvor kurz beschriebene Schwenkeinheit 15 sowie Teile der Stellvorrichtung 9 können bevorzugt auch noch Bestandteile der gemeinsamen Baueinheit bilden. Bevorzugt sind die Längsführungsvorrichtungen 29, 30 feststehend an der Fahrzeugkarosserie 2 gehalten und somit außenseitig von der ersten Ladeplattform 6 und den beiden Führungsprofilen 26, 27 daran angeordnet.

In der Fig. 4 ist eine mögliche Ausbildung der Längsführungsvorrichtungen 29, 30 zu ersehen, bei welcher jede der Längsführungsvorrichtungen 29, 30 mehrere Führungsrollen umfassen kann. Die einzelnen Führungsrollen können an einem gemeinsamen Basisrahmen 31 angeordnet und drehbar an diesem gelagert sein. Im vorliegenden Ausführungsbeispiel umfasst jede der Längsführungsvorrichtungen 29, 30 jeweils ein Führungsrollenpaar mit ersten Führungsrollen 32. In Längsrichtung bzw. Längserstreckung der Führungsanordnung 18, 19 gesehen und somit im Querschnitt des Führungsprofils 26, 27, sind die beiden ersten Führungsrollen 32 in Richtung der Tiefe 13 der ersten Ladeplattform 6 voneinander distanziert angeordnet. Die jeweiligen Drehachsen der ersten Führungsrollen 32 des Führungsrollenpaares sind jeweils in Richtung der Tiefe 13 der Ladeplattform 6 sowie in senkrechter Richtung bezüglich der Längserstreckung des Führungsprofils 26, 27 ausgerichtet. Durch diese Ausrichtung der Führungsrollenpaare mit deren ersten Führungsrollen 32 kann so für die daran geführten Führungsprofile 26, 27 und damit auch für die erste Ladeplattform 6 in Richtung der Breite gesehen, eine zueinander parallele Führung der beiden Führungsprofile 26, 27 erzielt werden.

Weiters ist hier noch dargestellt, dass zwischen jedem der Führungsrollenpaare mit deren ersten Führungsrollen 32 zumindest eine weitere Führungsrolle 33 angeordnet bzw. vorgesehen ist. Die Drehachse der weiteren Führungsrolle 33 ist bezüglich der Drehachsen der ersten Führungsrollen 32 des Führungsrollenpaares um 90° versetzt dazu angeordnet. Damit ist die Drehachse der weiteren Führungsrolle 33 in Richtung der Breite 12 der Ladeplattform 6 sowie in senkrechter Richtung bezüglich der Längserstreckung des jeweiligen Führungsprofils 26, 27 ausgerichtet. Dadurch kann in Richtung der Tiefe 13 gesehen, ebenfalls eine ausreichende Führung des jeweiligen Führungsprofils 26, 27 erzielt werden.

Unabhängig davon könnten die Längsführungsvorrichtungen 29, 30 aber auch durch Gleitführungen, Kugelführungen oder Linearführungen gebildet sein. Es soll damit eine möglichst verkantungsfreie Längsführung der ersten Ladeplattform 6 ermöglicht werden.

Wie nun wiederum besser aus den Fig. 1 und 3 zu ersehen ist, kann das Führungssystem 8, insbesondere die linke und die rechte Führungsanordnung 18, 19, in einem Mittelabschnitt oder einem Mittelbereich bezüglich der Tiefe 13 der ersten Ladeplattform 6 angeordnet sein. Unter dem Mittelabschnitt wird ein Abschnitt in Richtung der Tiefe 13 verstanden, welcher sich beidseits der halben Tiefe 13 jeweils ausgehend von dieser einerseits in Richtung auf die vordere Ladekante 17 sowie andererseits in die von der vorderen Ladekante 17 abgewendete Richtung erstreckt. Bei dieser möglichen Anordnung der beiden Führungsanordnungen 18, 19 ragt die erste Ladeplattform 6 in Fahrtrichtung des Fahrzeugs 1 sowie in Richtung der Tiefe 13 gesehen, in jeweils voneinander abgewendete Richtungen bzw. Seiten über die beiden Führungsanordnungen 18, 19 vor.

Unabhängig davon wäre es aber auch noch möglich, die linke und die rechte Führungsanordnung 18, 19 jeweils entlang des seitlichen Längsrandbereichs der ersten Ladeplattform 6 in Richtung von deren Tiefe 13 anzuordnen. Es wäre aber auch noch möglich, die beiden Führungsanordnungen 18, 19 im hinteren Eckbereich der ersten Ladeplattform 6 anzuordnen. Weiters könnten die beiden Führungsanordnungen 18, 19 aber auch in einem von der Ladekante 17 in Richtung der Tiefe 13 distanzierten hinteren Längsrandbereich der ersten Ladeplattform 6 angeordnet sein.

Zur Durchführung der Hebe- und Senkbewegung der ersten Ladeplattform 6 mitsamt den Lagervorrichtungen 22, 23 sowie den Führungsprofilen 26, 27 kann die Stellvorrichtung 9 der mindestens einen Hubeinheit 7 zumindest ein Stellorgan 34 umfassen. Das Stellorgan 34 kann z.B. durch einen Antriebsmotor gebildet sein, welches Stellorgan 34 mit den unterschiedlichen Antriebsmitteln mit zumindest einem der Führungsprofile 26 und/oder 27 in Antriebsverbindung steht. So könnte zum Beispiel das zumindest eine Stellorgan 34 auch durch eine Zylinder-Kolbenanordnung, wie z.B. einen Hydraulikzylinder und/oder einen Pneumatikzylinder, einen Kettenantrieb, einen Seilantrieb, einen Riemenantrieb oder aber auch eine Getriebeanordnung gebildet sein.

In dem hier vorliegenden Ausführungsbeispiel ist das Stellorgan 34 durch einen Schrittmotor oder Getriebemotor gebildet, welcher Motor mittels eines nicht näher bezeichneten Zahnrades mit einer Zahnstange 35 in Antriebsverbindung steht. Die zumindest eine Zahnstange 35 kann am Führungsprofil 26, 27 der Führungsanordnung 18, 19 angeordnet, insbesondere daran befestigt sein. Das zumindest eine Stellorgan 34 ist dann seinerseits an der Fahrzeugkarosserie 2 angeordnet bzw. daran befestigt.

Die Anordnung und Ausbildung des zumindest einen Stellorgans 34 kann je nach Anwendungsfall gemäß den Abmessungen sowie dem zur Verfügung stehenden Platz gewählt werden. So wäre es auch möglich, das zumindest eine Stellorgan 34 auch innerhalb und/oder hinterhalb der Führungsanordnungen 18, 19, insbesondere deren Führungsprofile 26, 27 anzuordnen. Damit kann ein Schutz des zumindest einen Stellorgans 34 erzielt werden und darüber hinaus auch noch jener Freiraum vergrößert werden, welcher zur Beladung vorgesehen ist.

Wie bereits zuvor beschrieben, ist die erste Ladeplattform 6 unter Zwischenschaltung der Lagervorrichtung 22, 23 schwenkbar an den Führungsprofilen 26, 27 gelagert. Zur Neigungsverstellung der Ladeplattform 6 kann die Schwenkeinheit 15 vorgesehen sein. Diese umfasst zumindest ein Schwenkorgan 36, wobei dieses im vorliegenden Ausführungsbeispiel durch eine Zylinder-Kolbenanordnung gebildet ist. Es wären aber auch andere Ausbildungen des Schwenkorgans 36 möglich. So wäre aber auch ein Kettenantrieb, Riemenantrieb, Seilantrieb oder aber auch ein Linearantrieb denkbar. Unabhängig davon könnte aber das Schwenkorgan 36 auch direkt durch einen Schwenkantrieb, wie z.B. einen Schwenkmotor, gebildet sein, welcher im Bereich zumindest einer der Schwenkachsen 24 und/oder 25 angeordnet oder ausgebildet ist.

Im Falle der Ausbildung des Schwenkorgans 36 als Zylinder-Kolbenanordnung ist ein erstes Ende 37 des Schwenkorgans 36 an der ersten Ladeplattform 6 angeordnet oder daran gehalten. Ein zweites Ende 38 des Schwenkorgans 36 ist am Führungsprofil 26, 27 der Führungsanordnung 18, 19 gehalten oder befestigt. Bevorzugt ist dabei das erste Ende 37 des Schwenkorgans 36 auf einer von einer Beladeseite abgewendeten Rückseite der ersten Ladeplattform 6 an dieser angeordnet bzw. gehalten. Das zweite Ende 38 des Schwenkorgans 36 ist im vorliegenden Ausführungsbeispiel an einem von der Lagereinheit 14 distanzierten, zweiten Endbereich 39 des Führungsprofils 26, 27 daran angeordnet bzw. daran gehalten. Bedingt durch die Ausladung der ersten Ladeplattform 6 in Richtung von deren Tiefe 13 kann eine Winkelstellung des Schwenkorgans 36 bezüglich der vertikalen Ausrichtung der Führungsanordnungen 18, 19, insbesondere deren Führungsprofile 26, 27, erzielt werden.

Zur besseren Stabilisierung und Vermeidung von einseitigen Belastungen der ersten Ladeplattform 6 kann es vorteilhaft sein, wenn die Schwenkeinheit 15 zwei Schwenkorgane 36 umfasst, wobei die beiden Schwenkorgane 36 in Richtung der Breite 12 der Ladeplattform 6 voneinander distanziert angeordnet sein können. Bevorzugt sind diese jeweils randseitig an der ersten Ladeplattform 6 angeordnet.

Die erste Ladeplattform 6 mit den beiden bevorzugt in seitlicher Richtung der Breite 12 voneinander distanziert angeordneten Führungsprofilen 26, 27 bildet bei einer Ansicht auf das Heck des Fahrzeuges 1 eine U-förmige Grundkonstruktion aus. Die Schwenkorgane 36 können ebenfalls bevorzugt im äußeren Randbereich der ersten Ladeplattform 6 wie die beiden Führungsprofile 26, 27 angeordnet sein.

Weiters ist es noch möglich, dass an der von der Beladeseite abgewendeten Seite des Führungsprofils 26, 27 zur Befestigung des oder der Schwenkorgane 36 an jenem der Führungsprofile 26, 27 ein darüber hinaus vorragendes Halteelement 40 angeordnet, insbesondere feststehend damit verbunden, ist.

In der Fig. 3 ist noch angedeutet, dass die erste Ladeplattform 6 in ihrer Ausgangsstellung im Aufnahmeraum 20 mittels zumindest einer Positioniervorrichtung 41 in ihrer relativen Lage und Position bezüglich der Fahrzeugkarosserie 2 insbesondere zentriert ausgerichtet sein kann. Damit kann bei Beendigung der Hubbewegung die erste Ladeplattform 6 bereits in einer vordefinierten Stellung vorpositioniert werden. Die Positioniervorrichtung 41 kann z.B. von zusammenwirkenden Keilflächen gebildet werden.

Zusätzlich dazu oder aber auch alleinig für sich, könnte die erste Ladeplattform 6 in ihrer Ausgangsstellung im Aufnahmeraum 20 mittels zumindest einer Feststellvorrichtung 42 arretiert gehalten werden. So könnte die Feststellvorrichtung 42 z.B. durch einen verstellbaren Bolzen oder Zapfen, gegebenenfalls mit einer Anlaufschräge, gebildet sein, welcher in der Arretierstellung der Feststellvorrichtung 42 in eine Arretierausnehmung in der Ladeplattform 6 eingesetzt ist.

Die zumindest eine Positioniervorrichtung 41 und/oder die zumindest eine Feststellvorrichtung 42 kann an beliebiger Stelle vorgesehen sein. Im vorliegenden Ausführungsbeispiel sind sowohl die Positioniervorrichtung 41 als auch die Feststellvorrichtung 42 an der Fahrzeugkarosserie 2 angeordnet und befinden sich an der von der Ladekante 17 abgewendeten Seite der ersten Ladeplattform 6. Es wäre auch noch möglich, die Positioniervorrichtung 41 und/oder die Feststellvorrichtung 42 direkt im Bereich zumindest einer der Führungsanordnungen 18, 19 vorzusehen. Um eine noch bessere Lagefixierung zumindest einer der Ladeplattformen 6, 47 während deren Ausgangsstellung oder Transportstellung zu erzielen, können auch je Ladeplattform auch mehrere Positioniervorrichtungen 41 und/oder die Feststellvorrichtungen 42 vorgesehen sein oder werden.

In der Fig. 2 ist noch in strichlierten Linien angedeutet, dass das Führungssystem 8 zusätzlich zumindest eine weitere Führungsanordnung 43 umfassen kann. Die weitere Führungsanordnung 43 kann analog ausgebildet sein, wie dies zuvor bei der linken und rechten Führungsanordnung 18, 19 beschrieben worden ist. Deshalb wird auf diese detaillierte Beschreibung hingewiesen und Bezug genommen. Die weitere Führungsanordnung 43 kann ein weiteres Führungsprofil 44 sowie zumindest eine nicht mehr näher dargestellte und beschriebene weitere Längsführungsvorrichtung umfassen. Die weitere Längsführungsvorrichtung kann analog ausgebildet sein, wie dies zuvor bereits detailliert beschrieben worden ist.

Gleichfalls kann die weitere Führungsanordnung 43 schwenkbar oder gelenkig mit der ersten Ladeplattform 6 verbunden sein. Dies kann durch eine nicht näher dargestellte und bezeichnete weitere Lagervorrichtung erfolgen. Weiters wäre es auch noch möglich, dass die Hubeinheit 7 im Bereich der weiteren Führungsanordnung 43 auch noch mit einem eigenen, unabhängigen Stellorgan 34 der Stellvorrichtung 9 ausgestattet ist. So kann eine unabhängige Verstellbewegung (auf und ab) der ersten Ladeplattform 6 an oder bei der weiteren Führungsanordnung 43 durchgeführt werden. In diesem Fall könnte für die Durchführung der Schwenkbewegung der ersten Ladeplattform 6 gegebenenfalls auf das Vorsehen der Schwenkeinheit 15, insbesondere deren Schwenkorgan 36, verzichtet werden.

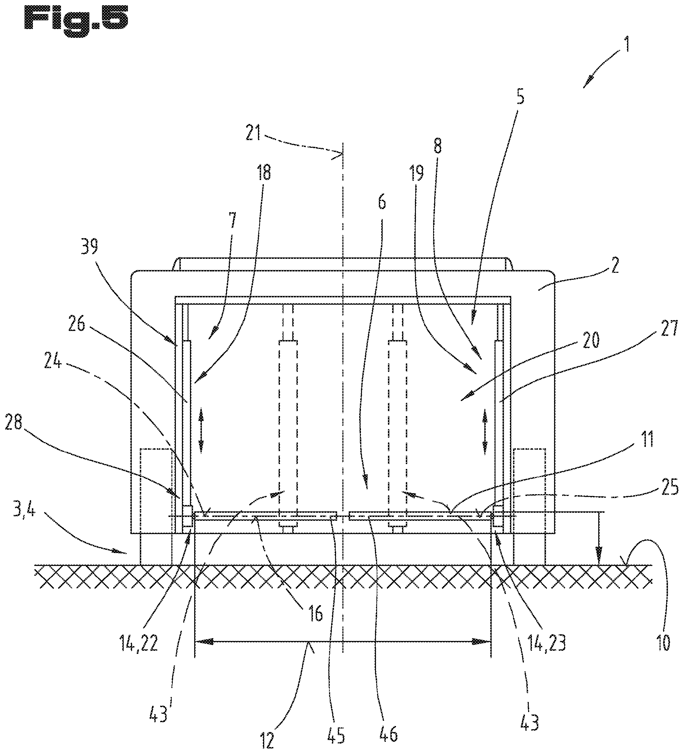

In der Fig. 5 ist noch dargestellt, dass die erste Ladeplattform 6 in Richtung ihrer Breite 12 geteilt und somit unterbrochen ausgebildet sein kann. Bedingt durch diese Unterteilung bildet sich ein linker Ladeplattformteil 45 und ein rechter Ladeplattformteil 46 aus. Sind wiederum die linke Führungsanordnung 18 und die linke Lagervorrichtung 22 vorgesehen, kann der linke Ladeplattformteil 45 daran schwenkbar gelagert sein. Analoges gilt auch für den rechten Ladeplattformteil 46. Dieser kann mittels der rechten Lagervorrichtung 23 schwenkbar an der rechten Führungsanordnung 19 gelagert sein.

Weiters kann jeder der Ladeplattformteile 45 und/oder 46 mit einem eigenen, unabhängigen Stellorgan 34 der Stellvorrichtung 9 in Antriebsverbindung stehen. Bedingt durch die jeweilige seitliche Anordnung der beiden Führungsanordnungen 18, 19 bildet der jeweilige Ladeplattformteil 45, 46 eine Art von Kragarm aus.

Zusätzlich wäre es auch noch möglich, jeden der Ladeplattformteile 45, 46 mit einem eigenen, unabhängigen Schwenkorgan 36 der Schwenkeinheit 15 in Antriebsverbindung zu bringen oder damit zu versehen.

Es wäre es aber auch noch möglich, bei zumindest einem der Ladeplattformteile 45, 46 zusätzlich zur linken Führungsanordnung 18 und/oder zusätzlich zur rechten Führungsanordnung 19 eine zuvor beschriebene weitere Führungsanordnung 43 mit dem weiteren Führungsprofil 44 sowie zumindest einer weiteren Längsführungsvorrichtung vorzusehen, wie dies in strichlierten Linien angedeutet ist. Ist auch noch bei jeder der Führungsanordnungen 18, 19 und 43 jeweils ein eigenes Stellorgan 34 vorgesehen, könnte auf die Anordnung bzw. das Vorsehen von eigenen Schwenkorganen 36 verzichtet werden und die Schwenkeinheit 15 von den Stellorganen 34 gebildet sein.

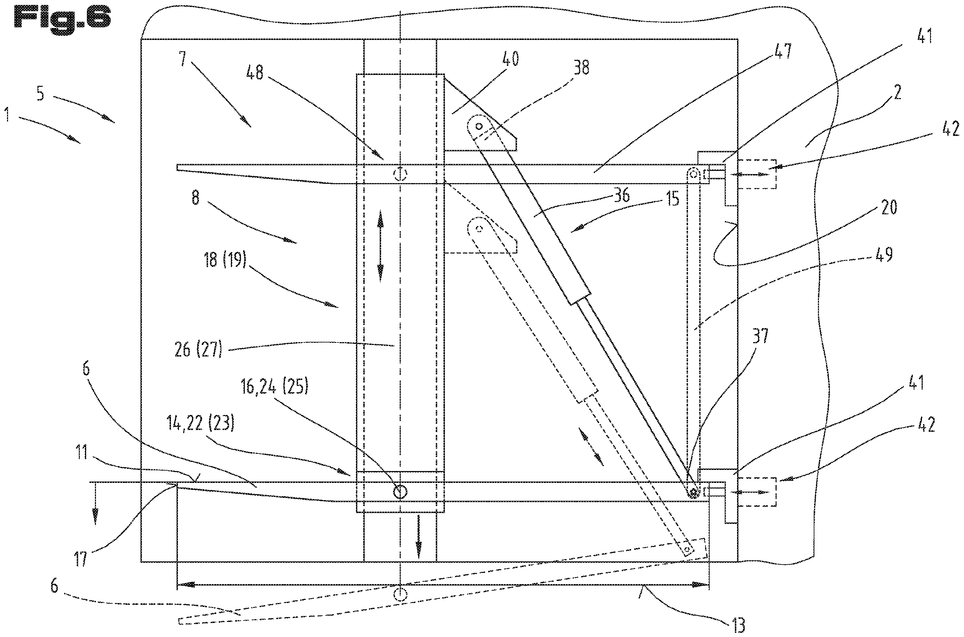

In der Fig. 6 ist eine weitere, gegebenenfalls unabhängige Ausbildung eines Teils der Ladeanordnung 5 gezeigt, wobei wiederum für gleiche Bauteile gleiche Bezugszeichen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen sowie Bezug genommen. Dies hier dargestellte Ausbildung entspricht grundsätzlich jener, wie diese in der Fig. 3 bereits näher beschrieben worden ist. Auf die Darstellung der Stellvorrichtung 9 wurde der besseren Übersichtlichkeit halber verzichtet, wobei zumindest ein Stellorgan 34 vorgesehen ist. Es ist auch hier wiederum die abgesenkte und verschwenkte Position der ersten Ladeplattform 6 in strichlierten angedeutet.

So ist hier noch gezeigt bzw. vorgesehen, dass die Ladeanordnung 5 zumindest eine weitere Ladeplattform 47 umfassen kann. Die zumindest eine weitere Ladeplattform 47 ist in vertikaler Richtung distanziert von der ersten Ladeplattform 6 an einem der Führungsprofile 26, 27 angeordnet. Dabei kann es sich um eine feststehende, ortsfeste Anordnung oder Halterung handeln.

Zusätzlich wäre es auch noch möglich, die zumindest eine weitere Ladeplattform 47 mittels einer weiteren Lagervorrichtung 48 als Bestandteil der Lagereinheit 14 an einem der Führungsprofile 26 und/oder 27 schwenkbar zu lagern. Ist auch die zumindest eine weitere Ladeplattform 47 schwenkbar gelagert, kann diese mit der ersten Ladeplattform 6 mittels eines Kopplungselements 49 gekoppelt sein. Das Kopplungselement kann z.B. durch eine Stange, ein Seil, eine Kette, einen Riemen oder dgl. gebildet sein.

Es wäre auch noch denkbar, dass an jedem der Führungsprofile 26 und/oder 27 mehrere weitere Ladeplattform 47 daran angeordnet und gegebenenfalls auch schwenkbar gelagert sind.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fahrzeug | 31 | Basisrahmen |
| 2 | Fahrzeugkarosserie | 32 | Führungsrolle |
| 3 | Vorderradpaar | 33 | Führungsrolle |
| 4 | Hinterradpaar | 34 | Stellorgan |
| 5 | Ladeanordnung | 35 | Zahnstange |
| 6 | Ladeplattform | 36 | Schwenkorgan |
| 7 | Hubeinheit | 37 | erstes Ende |
| 8 | Führungssystem | 38 | zweites Ende |
| 9 | Stellvorrichtung | 39 | zweiten Endbereich |
| 10 | Aufstandsfläche | 40 | Halteelement |
| 11 | Ladefläche | 41 | Positioniervorrichtung |
| 12 | Breite | 42 | Feststellvorrichtung |
| 13 | Tiefe | 43 | weitere Führungsanordnung |
| 14 | Lagereinheit | 44 | weiteres Führungsprofil |
| 15 | Schwenkeinheit | 45 | linker Ladeplattformteil |
| 16 | Schwenkachse | 46 | rechter Ladeplattformteil |
| 17 | Ladekante | 47 | weitere Ladeplattform |
| 18 | linke Führungsanordnung | 48 | weitere Lagervorrichtung |
| 19 | rechte Führungsanordnung | 49 | Kopplungselement |
| 20 | Aufnahmeraum | | |
| 21 | Fahrzeugmittellängsebene | | |
| 22 | linke Lagervorrichtung | | |
| 23 | rechte Lagervorrichtung | | |
| 24 | linke Schwenkachse | | |
| 25 | rechte Schwenkachse | | |
| 26 | linkes Führungsprofil | | |
| 27 | rechtes Führungsprofil | | |
| 28 | erster Endbereich | | |
| 29 | linke Längsführungsvorrichtung | | |
| 30 | rechte Längsführungsvorrichtung | | |

## Patentansprüche

1. Fahrzeug (1), insbesondere Einsatzfahrzeug, Feuerlöschfahrzeug, Kommunalfahrzeug, Transportfahrzeug, umfassend
- eine Fahrzeugkarosserie (2),
- mindestens ein Vorderradpaar (3) und mindestens ein Hinterradpaar (4),
- mindestens eine Ladeanordnung (5), wobei die mindestens eine Ladeanordnung (5) eine erste Ladeplattform (6) und mindestens eine Hubeinheit (7) mit einem Führungssystem (8) und einer Stellvorrichtung (9) umfasst, wobei mittels der Stellvorrichtung (9) die erste Ladeplattform (6) relativ bezüglich der Fahrzeugkarosserie (2) heb- und senkbar ist, und die erste Ladeplattform (6) eine Ladefläche (11) mit einer Breite (12) und einer Tiefe (13) ausbildet, und wobei die erste Ladeplattform (6) in deren oberen Ausgangsstellung sowie bei einer horizontalen Ausrichtung der Fahrzeugkarosserie (2) ebenfalls horizontal ausgerichtet ist,
- wobei die mindestens eine Ladeanordnung (5) innerhalb der Fahrzeugkarosserie (2) aufgenommen und angeordnet ist,
- wobei das Führungssystem (8) als Längsführungssystem ausgebildet ist,
- wobei das Führungssystem (8) eine linke Führungsanordnung (18) und eine rechte Führungsanordnung (19) umfasst, und die beiden Führungsanordnungen (18, 19) in Richtung der Breite (12) der ersten Ladeplattform (6) jeweils beidseits der ersten Ladeplattform (6) angeordnet sind,
- wobei die linke Führungsanordnung (18) und die rechte Führungsanordnung (19) des Führungssystems (8) in einem Mittelabschnitt bezüglich der Tiefe (13) der ersten Ladeplattform (6) angeordnet sind,
- und wobei die linke Führungsanordnung (18) des Führungssystems (8) ein linkes Führungsprofil (26) und die rechte Führungsanordnung (19) des Führungssystems (8) ein rechtes Führungsprofil (27) aufweist,
**dadurch gekennzeichnet,**
- **dass** die mindestens eine Ladeanordnung (5) eine Lagereinheit (14) umfasst, welche Lagereinheit (14) eine Schwenkachse (16) definiert,
- **dass** die Lagereinheit (14) eine linke Lagervorrichtung (22) und eine rechte Lagervorrichtung (23) umfasst, und die linke Lagervorrichtung (22) eine linke Schwenkachse (24) definiert und die rechte Lagervorrichtung (23) eine rechte Schwenkachse (25) definiert und die linke Schwenkachse (24) und die rechte Schwenkachse (25) zueinander fluchtend ausgerichtet sind sowie gemeinsam die Schwenkachse (16) der Lagereinheit (14) bilden,
- **dass** die erste Ladeplattform (6) an der Lagereinheit (14) um deren gemeinsame Schwenkachse (16) schwenkbar gelagert ist,
- **dass** die Lagereinheit (14) am Führungssystem (8) angeordnet ist und dabei die linke Lagervorrichtung (22) der Lagereinheit (14) mit dem linken Führungsprofil (26) und die rechte Lagervorrichtung (23) der Lagereinheit (14) mit dem rechten Führungsprofil (27) verbunden ist,
- **dass** die linke und die rechte Lagervorrichtung (22, 23) der Lagereinheit (14) und die daran gelagerte erste Ladeplattform (6) in einem einer Aufstandsfläche (10) des Fahrzeugs (1) zuwendbaren, unteren ersten Endbereich (28) der Führungsprofile (26, 27) angeordnet sind;
- **dass** die mindestens eine Ladeanordnung (5) weiters eine Schwenkeinheit (15) umfasst,
- **dass** die erste Ladeplattform (6) mit der Schwenkeinheit (15) in Antriebsverbindung steht, mittels welcher Schwenkeinheit (15) die erste Ladeplattform (6) in ihrer relativen Position bezüglich des Führungssystems (8) um die gemeinsame Schwenkachse (16) der Lagereinheit (14) verstellbar ist,
- **dass** die Schwenkeinheit (15) zumindest ein Schwenkorgan (36), insbesondere eine Zylinder-Kolbenanordnung, einen Kettenantrieb, einen Riemenantrieb, einen Seilantrieb oder einen Linearantrieb, umfasst und ein erstes Ende (37) des Schwenkorgans (36) an der ersten Ladeplattform (6) gehalten ist und ein zweites Ende (38) des Schwenkorgans (36) an dem Führungsprofil (26, 27) der Führungsanordnung (18, 19) gehalten ist,
- **dass** das erste Ende (37) des Schwenkorgans (36) auf einer von einer Beladeseite abgewendeten Rückseite der ersten Ladeplattform (6) an dieser gehalten ist, und
- **dass** das zweite Ende (38) des Schwenkorgans (36) an einem von der Lagereinheit (14) distanzierten zweiten Endbereich (39) des Führungsprofils (26, 27) daran angeordnet ist.

2. Fahrzeug (1) nach Anspruch 1, **dadurch gekennzeichnet, dass** die Ladefläche (11) der ersten Ladeplattform (6) in ihrer Ausgangsstellung bei einer horizontalen Ausrichtung der Fahrzeugkarosserie (2) ebenfalls eine horizontale Ausrichtung aufweist und nach deren Verschwenkung auf die von der Fahrzeugkarosserie (2) abgewendete Seite abfallend ausgerichtet ist.

3. Fahrzeug (1) nach Anspruch 1 oder 2, **dadurch gekennzeichnet, dass** die Ladeanordnung (5) zumindest eine Positioniervorrichtung (41) und/oder eine Feststellvorrichtung (42) umfasst und zumindest die erste Ladeplattform (6) in ihrer Ausgangsstellung mittels der Positioniervorrichtung (41) und/oder der Feststellvorrichtung (42) in ihrer Ausgangsstellung relativ bezüglich der Fahrzeugkarosserie (2) positioniert ist und/oder gehalten ist.

4. Fahrzeug (1) nach einem der vorhergehenden Ansprüche, **dadurch gekennzeichnet, dass** das Führungssystem (8) zumindest eine weitere Führungsanordnung (43) umfasst und die zumindest eine weitere Führungsanordnung (43) schwenkbar mit der ersten Ladeplattform (6) verbunden ist.

5. Fahrzeug (1) nach einem der vorhergehenden Ansprüche, **dadurch gekennzeichnet, dass** das Führungssystem (8), insbesondere dessen Führungsanordnungen (18, 19, 43) mit deren Führungsprofilen (26, 27,), bei einer horizontalen Ausrichtung der Fahrzeugkarosserie (2) in vertikaler Richtung verlaufend ausgerichtet ist.

6. Fahrzeug (1) nach Anspruch 1 oder 5, **dadurch gekennzeichnet, dass** die linke Führungsanordnung (18) zumindest eine linke Längsführungsvorrichtung (29) umfasst und die rechte Führungsanordnung (19) zumindest eine rechte Längsführungsvorrichtung (30) umfasst, und das linke Führungsprofil (26) an der zumindest einen linken Längsführungsvorrichtung (29) und das rechte Führungsprofil (27) an der zumindest einen rechten Längsführungsvorrichtung (30) geführt ist.

7. Fahrzeug (1) nach einem der vorhergehenden Ansprüche, **dadurch gekennzeichnet, dass** die Ladeanordnung (5) zumindest eine weitere Ladeplattform (47) umfasst, welche zumindest eine weitere Ladeplattform (47) in vertikaler Richtung distanziert von der ersten Ladeplattform (6) an einem der Führungsprofile (26, 27) angeordnet ist.

8. Fahrzeug (1) nach Anspruch 7, **dadurch gekennzeichnet, dass** die zumindest eine weitere Ladeplattform (47) mittels einer weiteren Lagervorrichtung (48) der Lagereinheit (14) an einem der Führungsprofile (26, 27) schwenkbar gelagert ist.

9. Fahrzeug (1) nach Anspruch 7 oder 8, **dadurch gekennzeichnet, dass** die zumindest eine weitere Ladeplattform (47) mit der ersten Ladeplattform (6) mittels eines Kopplungselements (49) gekoppelt ist.

## Claims

1. A vehicle (1), in particular an emergency vehicle, a fire engine, a communal vehicle, transport vehicle, comprising
- a vehicle body (2),
- at least one front-wheel pair (3) and at least one rear-wheel pair (4),
- at least one loading arrangement (5), wherein the at least one loading arrangement (5) comprises a first loading platform (6) and at least one lifting unit (7) having a guide system (8) and an actuator device (9), wherein, by means of the actuator device (9), the first loading platform (6) is liftable and lowerable relative to the vehicle body (2), and the first loading platform (6) forms a loading area (11) having a width (12) and a depth (13), and wherein the first loading platform (6), in its upper initial position, and given a horizontal orientation of the vehicle body (2), is also oriented so as to be horizontal,
- wherein the at least one loading arrangement (5) is accommodated and arranged inside the vehicle body (2),
- wherein the guide system (8) is designed as a longitudinal guide system,
- wherein the guide system (8) comprises a left guide arrangement (18) and a right guide arrangement (19), and the two guide arrangements (18, 19) are arranged in the direction of the width (12) of the first loading platform (6), in each case on both sides of the first loading platform (6),
- wherein the left guide arrangement (18) and the right guide arrangement (19) of the guide system (8) are arranged in a middle section with respect to the depth (13) of the first loading platform (6),
- and wherein the left guide arrangement (18) of the guide system (8) has a left guide profile (26), and the right guide arrangement (19) of the guide system (8) has a right guide profile (27),
**characterized in**
- **that** the at least one loading arrangement (5) comprises a bearing unit (14), which bearing unit (14) defines a pivot axis (16),
- **that** the bearing unit (14) comprises a left bearing device (22) and a right bearing device (23), and the left bearing device (22) defines a left pivot axis (24), and the right bearing device (23) defines a right pivot axis (25), and the left pivot axis (24) and the right pivot axis (25) are aligned with one another and together form the pivot axis (16) of the bearing unit (14),
- **that** the first loading platform (6) is mounted on the bearing unit (14) in a manner pivotable about its pivot axis (16),
- **that** the bearing unit (14) is arranged on the guide system (8), and thus, the left bearing device (22) of the bearing unit (14) is connected to the left guide profile (26), and the right bearing device (23) of the bearing unit (14) is connected to the right guide profile (27),
- **that** the left and the right bearing devices (22, 23) of the bearing unit (14) and the first loading platform (6) mounted thereon are arranged in a lower first end region (28) of the guide profiles (26, 27) that can be turned toward a support surface (10) of the vehicle (1);
- **that** the at least one loading arrangement (5) further comprises a pivoting unit (15),
- **that** the first loading platform (6) is drive-connected to the pivoting unit (15), by means of which pivoting unit (15) the first loading platform (6), in its relative position with respect to the guide system (8), is adjustable about the pivot axis (16) of the bearing unit (14),
- **that** the pivoting unit (15) comprises at least one pivoting element (36), in particular a cylinder piston arrangement, a chain drive, a belt drive, a cable drive or a linear drive, and a first end (37) of the pivoting element (36) is held on the first loading platform (6), and a second end (38) of the pivoting element (36) is held on the guide profile (26, 27) of the guide arrangement (18, 19),
- **that** the first end (37) of the pivoting element (36) on a rear side of the first loading platform (6) facing away from a loading side is held thereon, and
- **that** the second end (38) of the pivoting element (36) on a second end region (39) of the guide profile (26, 27) distanced from the bearing unit (14) is arranged thereon.

2. The vehicle (1) according to claim 1, **characterized in that** the loading area (11) of the first loading platform (6), in its initial position, given a horizontal orientation of the vehicle body (2), also has a horizontal orientation and, after its pivoting to the side facing away from the vehicle body (2), is oriented in downward manner.

3. The vehicle (1) according to claim 1 or 2, **characterized in that** the loading arrangement (5) comprises at least one positioning device (41) and/or one locking device (42), and at least the first loading platform (6) is positioned and/or held in its initial position by means of the positioning device (41) and/or of the locking device (42) in its initial position relative to the vehicle body (2).

4. The vehicle (1) according to one of the preceding claims, **characterized in that** the guide system (8) comprises at least one further guide arrangement (43), and the at least one further guide arrangement (43) is connected so as to be pivotable to the first loading platform (6).

5. The vehicle (1) according to one of the preceding claims, **characterized in that** the guide system (8), in particular its guide arrangements (18, 19, 43) with their guide profiles (26, 27), is aligned so as to extend in the vertical direction in the case of a horizontal orientation of the vehicle body (2).

6. The vehicle (1) according to claim 1 or 5, **characterized in that** the left guide arrangement (18) comprises at least one left longitudinal guide device (29), and the right guide arrangement (19) comprises at least one right longitudinal guide device (30), and the left guide profile (26) is guided on the at least one left longitudinal guide arrangement (29), and the right guide profile (27) is guided on the at least one right longitudinal guide arrangement (30).

7. The vehicle (1) according to one of the preceding claims, **characterized in that** the loading arrangement (5) comprises at least one further loading platform (47), which at least one further loading platform (47) is arranged on one of the guide profiles (26, 27) so as to be spaced apart from the first loading platform (6) in the vertical direction.

8. The vehicle (1) according to claim 7, **characterized in that** the at least one further loading platform (47) is mounted, by means of a further bearing device (48) of the bearing unit (14), so as to be pivotable on one of the guide profiles (26, 27).

9. The vehicle (1) according to claim 7 or 8, **characterized in that** the at least one further loading platform (47) is coupled with the first loading platform (6) by means of a coupling element (49).

## Revendications

1. Véhicule (1), plus particulièrement véhicule d'intervention, véhicule de pompiers, véhicule communal, véhicule de transport, comprenant
- une carrosserie de véhicule (2),
- au moins une paire de roues avant (3) et au moins une paire de roues arrière (4),
- au moins une disposition de chargement (5), dans lequel l'au moins une disposition de chargement (5) comprend une première plate-forme de chargement (6) et au moins une unité de levage (7) avec un système de guidage (8) et un dispositif de réglage (9), dans lequel, au moyen du dispositif de réglage (9), la première plate-forme de chargement (6) peut être levée et baissée par rapport à la carrosserie du véhicule (2) et la première plate-forme de chargement (6) constitue une surface de chargement (11) avec une largeur (12) et une profondeur (13) et dans lequel la première plate-forme de chargement (6) est orientée horizontalement dans sa position initiale supérieure ainsi que dans une orientation horizontale de la carrosserie du véhicule (2),
- dans lequel l'au moins une disposition de chargement (5) est logée et disposée à l'intérieur de la carrosserie du véhicule (2),
- dans lequel le système de guidage (8) est conçu comme un système de guidage longitudinal,
- dans lequel le système de guidage (8) comprend une disposition de guidage gauche (18) et une disposition de guidage droite (19) et les deux dispositions de guidage (18, 19) sont disposés, en direction de la largeur (12) de la première plate-forme de chargement (6), des deux côtés de la première plate-forme de chargement (6),
- dans lequel la disposition de guidage gauche (18) et la disposition de guidage droite (19) du système de guidage (8) sont disposés dans une partie centrale par rapport à la profondeur (13) de la première plate-forme de chargement (6),
- et dans lequel la disposition de guidage gauche (18) du système de guidage (8) comprend un profilé de guidage gauche (26) et la disposition de guidage droite (19) du système de guidage (8) comprend un profilé de guidage droit (27),
**caractérisé en ce que**
- l'au moins une disposition de chargement (5) comprend une unité de palier (14), cette unité de palier (14) définissant un axe de pivotement (16),
- l'unité de palier (14) comprend un dispositif de palier gauche (22) et un dispositif de palier droit (23) et le dispositif de palier gauche (22) définit un axe de pivotement gauche (24) et le dispositif de palier droit (23) définit un axe de pivotement droit (25) et l'axe de pivotement gauche (24) et l'axe de pivotement droit (25) sont alignés entre eux et constituent ensemble l'axe de pivotement (16) de l'unité de palier (14),
- la première plate-forme de chargement (6) est montée de manière pivotante sur l'unité de palier (14) autour de son axe de pivotement commun (16),
- l'unité de palier (14) est disposée sur le système de guidage (8) et le dispositif de palier gauche (22) de l'unité de palier (14) est relié au profilé de guidage gauche (26) et le dispositif de palier droit (23) de l'unité de palier (14) est relié au profilé de guidage droit (27),
- les dispositifs de palier gauches et droits (22, 23) de l'unité de palier (14) et la première plate-forme de chargement (6) qui est montée dessus sont disposés dans une première partie d'extrémité inférieure (28) des profilés de guidage (26, 27), pouvant être orientée vers une surface de pose (10) du véhicule (1) ;
- l'au moins une disposition de chargement (5) comprend en outre une unité de pivotement (15),
- la première plate-forme de chargement (6) est en liaison d'entraînement avec l'unité de pivotement (15), la première plate-forme (6) pouvant, au moyen de cette unité de pivotement (15), être déplacée dans sa position relative par rapport au système de guidage (8), autour de l'axe de pivotement commun (16) de l'unité de palier (14),
- l'unité de pivotement (15) comprend au moins un organe de pivotement (36), plus particulièrement une disposition cylindre-piston, un entraînement par chaîne, un entraînement par courroie, un entraînement par câble ou un entraînement linéaire et une première extrémité (37) de l'organe de pivotement (36) est maintenue au niveau de la première plate-forme de chargement (6) et une deuxième extrémité (38) de l'organe de pivotement (36) est maintenue au niveau du profilé de guidage (26, 27) de la disposition de guidage (18, 19),
- la première extrémité (37) de l'organe de pivotement (36) est maintenue, sur un côté arrière de la première plate-forme de chargement (6), opposé à un côté de chargement, au niveau de celle-ci et
- la deuxième extrémité (38) de l'organe de pivotement (36) est disposée, au niveau d'une deuxième partie d'extrémité (39), distante de l'unité de palier (14), du profilé de guidage (26, 27), au niveau de celui-ci.

2. Véhicule (1) selon la revendication 1, **caractérisé en ce que** la surface de chargement (11) de la première plate-forme de chargement (6) présente, dans sa position initiale, dans le cas d'une orientation horizontale de la carrosserie du véhicule (2), également une orientation horizontale et est orientée, après son pivotement vers le côté opposé à la carrosserie du véhicule (2), de manière descendante.

3. Véhicule (1) selon la revendication 1 ou 2, **caractérisé en ce que** la disposition de chargement (5) comprend au moins un dispositif de positionnement (41) et/ou un dispositif d'immobilisation (42) et au moins la première plate-forme de chargement (6) est positionnée et/ou maintenue, au moyen du dispositif de positionnement (41) et/ou du dispositif d'immobilisation (42), dans sa position initiale par rapport à la carrosserie du véhicule (2).

4. Véhicule (1) selon l'une des revendications précédentes, **caractérisé en ce que** le système de guidage (8) comprend au moins une autre disposition de guidage (43) et l'au moins une autre disposition de guidage (43) est reliée de manière pivotante avec la première plate-forme de chargement (6).

5. Véhicule (1) selon l'une des revendications précédentes, **caractérisé en ce que** le système de guidage (8), plus particulièrement ses dispositions de guidage (18, 19, 43) avec leurs profilés de guidage (26, 27), est orienté dans la direction verticale dans le cas d'une orientation horizontale de la carrosserie du véhicule (2).

6. Véhicule (1) selon la revendication 1 ou 5, **caractérisé en ce que** la disposition de guidage gauche (18) comprend au moins un dispositif de guidage longitudinal gauche (29) et la disposition de guidage droite (19) comprend au moins un dispositif de guidage longitudinal droit (30) et le profilé de guidage gauche (26) est guidé au niveau de l'au moins un dispositif de guidage longitudinal gauche (29) et le profilé de guidage droit (27) est guidé au niveau de l'au moins un dispositif de guidage longitudinal droit (30).

7. Véhicule (1) selon l'une des revendications précédentes, **caractérisé en ce que** la disposition de chargement (5) comprend au moins une autre plate-forme de chargement (47), cette au moins une autre plate-forme de chargement (47) étant disposée de manière distante, dans la direction verticale, de la première plate-forme de chargement (6), au niveau des profilés de guidage (26, 27).

8. Véhicule (1) selon la revendication 7, **caractérisé en ce que** l'au moins une autre plate-forme de chargement (47) est montée de manière pivotante, au moyen d'un autre dispositif de palier (48) de l'unité de palier (14), au niveau d'un des profilés de guidage (26, 27).

9. Véhicule (1) selon la revendication 7 ou 8, **caractérisé en ce que** l'au moins une autre plate-forme de chargement (47) est couplée avec la première plate-forme de chargement (6) au moyen d'un élément de couplage (49).
